# EUROPÄISCHE PATENTSCHRIFT

(11) **EP 1 738 096 B1**
(45) Veröffentlichungstag und Bekanntmachung des Hinweises auf die Patenterteilung: **22.02.2012**
(21) Anmeldenummer: 05731779.4
(22) Anmeldetag: 19.04.2005
(51) Int. Cl.: F16J 15/32

(54) **VERFAHREN ZUR BEARBEITUNG VON LAMELLENDICHTUNGEN**
LEAF SEAL MANUFACTURING PROCESS
PROCEDE DE FABRICATION DE GARNITURES D'ETANCHEITE A LAMELLES

(30) Priorität: 23.04.2004 DE 102004020377
(43) Veröffentlichungstag der Anmeldung: 03.01.2007
(73) Patentinhaber: Alstom Technology Ltd, 5400 Baden (CH)
(72) Erfinder: RHODES, Nigel, Abbeymead Gloucester GL 4 RR (GB)
(86) Internationale Anmeldenummer: PCT/EP2005/051708
(87) Internationale Veröffentlichungsnummer: WO 2005/103535

(56) Entgegenhaltungen:
- EP-A- 1 302 708
- EP-A- 1 489 340
- GB-A- 2 021 210
- US-A- 6 120 622

## Beschreibung

### TECHNISCHES GEBIET

Die vorliegende Erfindung bezieht sich auf das Gebiet der Dichtung von rotierenden Maschinen. Sie betrifft ein Verfahren zum Bearbeiten von Lamellendichtungen gemäss dem Oberbegriff des Anspruchs 1, wie sie beispielsweise in Gasturbinen eingesetzt werden.

### STAND DER TECHNIK

Eine Gasturbine besteht aus einem Rotor, auf dem verschiedene Stufen mit Verdichterschaufeln und Turbinenschaufeln angebracht werden, sowie einem Statorgehäuse. Der Rotor wird an jedem Ende der Rotorwelle in Lagern montiert.

Die Steuerung des Gasstroms innerhalb der Gasturbine ist von überragender Bedeutung im Hinblick sowohl auf die Funktionalität als auch die Effektivität. An verschiedenen Stellen entlang der Rotorwelle werden Dichtungs-Technologien verwendet, um den axialen Gasstrom entlang der Welle zu verringern. Dieses ist besonders wichtig neben den Lagern, um zu verhindern, dass das Öl, das in den Lagern benutzt wird, durch die heissen Gase des Gasstroms überhitzt.

Traditionsgemäß werden in dieser Situation zwei Arten von Dichtungsechnologien - meist alternativ, manchmal auch miteinander kombiniert - benutzt. Dies sind Labyrinthdichtungen und Bürstendichtungen.

Labyrinthdichtungen haben keinen Metall-Metall-Kontakt zwischen dem Rotor und dem Stator; daher ist ihr Dichtungseffekt verhältnismäßig klein. Jedoch bieten sie den Vorteil der niedrigen Rotationsreibung und der deswegen praktisch unbegrenzten Lebensdauer.

Bürstendichtungen andererseits haben höhere Reibungsverluste wegen der Reibung zwischen den Borstenenden und der Rotorwelle. Dies hat eine Abnutzung zur Folge, welche die Lebensdauer der Dichtung begrenzt. Die Bürstendichtungen bieten jedoch eine bessere Hemmung des axialen Gasstroms, besonders bei höheren axialen Druckdifferenzen.

Der Gebrauch dieser Technologien für das Abdichten in den Gasturbinen hat zahlreiche Einschränkungen. Erstens ist die axiale Druckdifferenz, der sie widerstehen können, noch ziemlich niedrig. Im Falle der Bürstendichtungen liegt dies an den Borsten, welche die gleiche Steifheit in axialer und in Umfangsrichtung haben: Hohe Drücke können die Borsten veranlassen, in axialer Richtung nachzugeben. Auch ist die Fähigkeit der Dichtungen, eine bedeutende Radialbewegung zuzulassen und ihr zu widerstehen, niedrig.

Das Design einer Bürstendichtung ist häufig ein Kompromiss zwischen dem Verwenden einer Unterstützungsplatte, die genügend axiale Unterstützung geben soll, und dem Nicht-Einschränken der Radialbewegung.

Um die Nachteile der bekannten Bürstendichtungen zu vermeiden, ist in der US-B1-6,343,792 eine Lamellendichtung ("leaf seal") vorgeschlagen worden, welche die gleiche Funktion wie entweder eine Labyrinthdichtung oder eine Bürstendichtung ausübt, aber die Vorteile von beiden aufweist. Anstelle der Borsten, die aus Drähten mit kreisförmigem Querschnitt hergestellt werden, werde dünnen Metalllamellen oder-blätter in bestimmter Anordnung zusammengebaut (siehe z.B. die Fig. 3 der US-B1-6,343,792 oder die Fig. 1 der vorliegenden Anmeldung). Die Lamellen, die mit ihren Flächen im wesentlichen parallel zur axialen Richtung orientiert sind, sind in der axialen Richtung viel steifer als in Umfangsrichtung. So kann die Dichtung höheren Druckdifferenzen widerstehen, ohne dabei deren Möglichkeiten zum Zulassen von Radialbewegungen einzuschränken. Auch bietet der breite Bereich auf dem Rotor, der von den Spitzen der Lamellen überstrichen wird, die Gelegenheit, während des Betriebes eine hydrodynamische Kraft zu erzeugen, welche die Lamellenspitzen von der Welle trennen kann. Auf diese Weise kann ein Abstand von einigen Mikron erzeugt und beibehalten werden, so dass die Abnutzung, die Reibungshitze und die Reibungsverluste bis fast auf Null verringert werden.

Das grundlegende Design bezieht eine Anzahl von dünnen Metalllamellen ein, die zwischen sich einen kontrollierten Luftspalt aufweisen und in einem vorgegebenen Winkel zum Radius befestigt werden. Der Luftspalt ist ein kritischer Designparameter: Er ermöglicht das Auftreten eines Luftstroms, um damit den hydrodynamischen Effekt zu erzeugen; er darf aber nicht so groß sein, um einen übermässigen axialen Leckstrom zu erlauben.

Zwei Varianten des Lamellendichtungs-Designs sind möglich: Bei der einen Variante werden die Lamellen nach unten geblasen, bei der anderen dagegen aufwärts. Die Variante mit den nach unten geblasenen Lamellen schliesst ein, dass man einen Abstand zwischen den Lamellenspitzen und der Welle während dem Zusammenbau und dem Anfahren hat, und dass dieser Spalt durch den Einsatz eines Luftstroms zwischen den Lamellen auf sehr kleine Werte heruntergefahren wird. Andererseits schliesst die Variante mit dem Aufwärtsblasen ein, dass man während des Anfahrens eine geringfügige gegenseitige Beeinflussung zwischen den Lamellenspitzen und der Welle hat, und einen Abstand erzeugt, wenn die Welle beschleunigt. In beiden Fällen ist die Strömung des Mediums durch die Luftspalte zwischen den Lamellen kritisch, ebenso wie die Steuerung des inneren Durchmessers der Dichtung, der durch die Lamellenspitzen erzeugt wird.

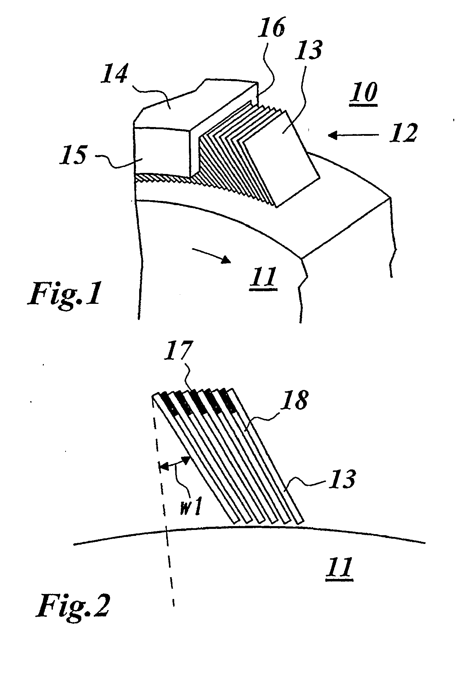

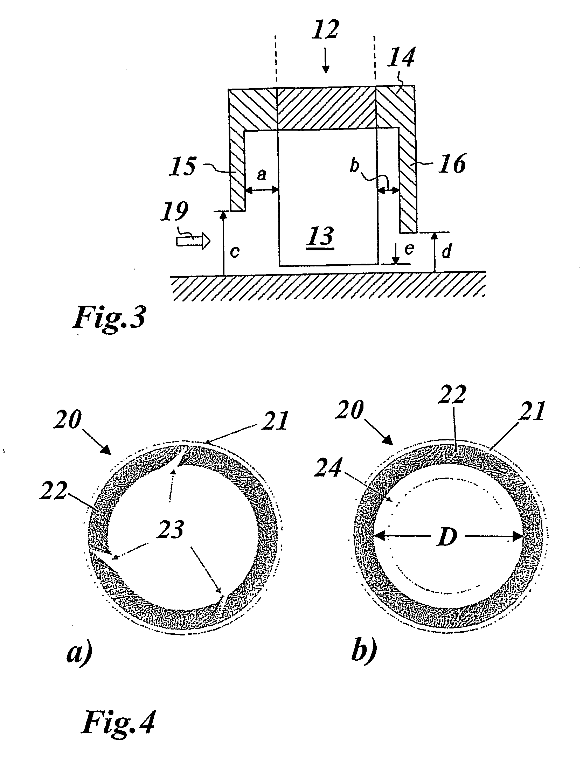

Der Luftstrom durch die Lamellen kann durch Verwendung einer vorderen und einer hinteren Platte verändert werden, die einen schmalen Spalt zwischen den Oberflächen des Lamellenpakets und den Platten frei lassen (siehe die o.g. Fig. 1 und 3). Ein sorgfältiges Design dieser Geometrien macht es möglich, die Aufwärts- oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des Lamellendichtungskonzeptes ist eine grössere Toleranz der Radialbewegung als bei den Labyrinth- oder Bürstendichtungen. Dies erfordert dort einen grossen Abstand zwischen dem inneren Durchmesser der vorderen und rückseitigen Platten und der Welle.

Abhängig von der gewählten Geometrie für die Dichtung, und von dem Durchmesser der zu dichtenden Welle, kann die Anzahl der Lamellen einige Tausend oder zig Tausende betragen. Die Genauigkeit, mit der diese hergestellt, zusammengebaut und verbunden werden können, wobei ein reproduzierbarer Luftspalt zwischen jedem Paar von Lamellen sichergestellt wird, ist kritisch für die erfolgreich Implementierung jedes möglichen Dichtungsdesigns.

Das Fügeverfahren zum Fixieren der Lamellen in ihrer Position könnte eine mechanische Technik, wie Festklemmen, Schweissen oder Hartlöten oder jede mögliche Kombination davon sein. Es ist dabei ganz offensichtlich wichtig, dass eine minimale Störung der Lamellen oder ihrer relativen Positionen während des Fügeprozesses auftritt.

Sollten bei der Herstellung von Lamellendichtungen oder beim späteren Einsatz gleichwohl lokale Fehlstellungen der Lamellen auftreten, wäre es wünschenswert, diese Fehlstellungen auf einfache Weise zu korrigieren, um die volle Dichtungsfunktion der Dichtungen sicherzustellen.

In der US-A-6,120,622 wird vorgeschlagen, bei Dichtungen vom Bürstentyp die zunächst radial ausgerichteten Borsten dadurch in die gewünschte Schrägstellung zu bringen, dass sie durch Einschieben eines sich drehenden, konischen Dorns zunächst in eine ausgewählte Richtung umgebogen werden, und dass sie dann thermisch getempert werden, um die Biegung dauerhaft zu machen, so dass sie auch nach Entfernen des Dorns bestehen bleibt.

Auch die GB-A-2 021 210 sieht eine thermische Behandlung von Bürsten einer Bürstendichtung vor, die durch mechanische Spannung in eine gewünschte gekrümmte Form gebracht worden sind.

### DARSTELLUNG DER ERFINDUNG

Es ist daher Aufgabe der Erfindung, ein Verfahren zur Bearbeitung von Lamellendichtungen anzugeben, mit dem Abweichungen der Lamellen von der optimalen geometrischen Anordnung einfach und sicher korrigiert werden können, um den Lamellendichtungen ihre volle Funktionalität zu geben bzw. wiederzugeben.

Die Aufgabe wird durch die Gesamtheit der Merkmale des Anspruchs 1 gelöst. Der Kern der Erfindung besteht darin, zur gleichmässigen Ausrichtung der freien Enden der Lamellen in einem ersten Schritt die Lamellen mit ihren freien Enden an einer koaxialen zylindrischen Fläche mit einem vorgegebenen Durchmesser zur Anlage zu bringen, derart, dass sie mit einer Biegespannung beaufschlagt sind, und dass in einem zweiten Schritt die mit der Biegespannung beaufschlagten Lamellen so einer Wärmebehandlung unterzogen werden, dass die Biegespannung vollständig abgebaut wird. Durch den wärmebedingten Abbau der Biegespannungen passen sich die Lamellen optimal und dauerhaft an die zylindrische Fläche mit vorgegebenem Durchmesser an, wobei sich unterschiedliche Positionen der einzelnen Lamellen im Bezug auf die Fläche ausgleichen. Als Folge davon liegen die freien Enden der Lamellen auf einem gemeinsamen Kreis mit einem dem vorgegebenen Durchmesser im wesentlichen gleichen Durchmesser.

Bevorzugt bestehen die im Verfahren bearbeiteten Lamellen aus einem Metall oder einer Metalllegierung.

Die Lamellen sind an ihren äusseren Enden fixiert und die Anordnung wird mit den Lamellen im ersten Schritt über einen koaxial ausgerichteten Dorn geschoben, der zumindest einen zylindrischen Abschnitt aufweist, dessen Aussendurchmesser im wesentlichen gleich dem vorgegebenen Durchmesser ist.

Wenn die Lamellen zur Bildung der Lamellendichtung mit einem aussen umlaufenden Gehäuse oder Stützring verschweisst werden, werden die der gleichmässigen Ausrichtung der freien Enden der Lamellen dienenden Bearbeitungsschritte nach Beendigung des Schweissprozesses durchgeführt.

Wenn die Lamellen zur Bildung der Lamellendichtung mit einem aussen umlaufenden Gehäuse oder Stützring hart verlötet werde werden die der gleichmässigen Ausrichtung der freien Enden der Lamellen dienenden Bearbeitungsschritte vorzugsweise innerhalb des Lötprozesses durchgeführt.

Dabei kann es von Vorteil sein, dass die beiden Bearbeitungsschritte mehrfach mit schrittweise erhöhtem vorgegebenen Durchmesser durchgeführt werden.

Das Verfahren lässt sich noch einfacher durchführen, wenn ein Dom verwendet wird, der einen an den zylindrischen Abschnitt angrenzenden konischen Abschnitt aufweist, und die Anordnung mit den Lamellen im ersten Schritt über den konischen Abschnitt auf den Dom geschoben wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht den typischen Aufbau einer Lamellendichtung, wie sie bei einer Gasturbine Anwendung findet;
- Fig. 2: in der Seitenansicht in Achsrichtung die aus der radialen Richtung geneigte Anordnung einzelner Lamellen mit ihren dazwischen liegenden Distanzelementen;
- Fig. 3: die Ansicht einer zu Fig. 1 vergleichbaren Lamellendichtung in Umfangsrichtung mit einer vorderen und hinteren Endplatte;
- Fig. 4: in zwei Teilfiguren in Achsrichtung gesehen die lokal gestörte Ausrichtung der Lamellen einer beispielhaften Lamellendichtung vor der erfindungsgemässen Bearbeitung (Fig. 4a) und nach dem aufschieben auf einen entsprechenden zylindrischen Dom (Fig. 4b);
- Fig. 5: in einer schematischen Seitenansicht die durch den Dorn verursachte Beaufschlagung der einzelnen Lamellen mit einer Biegespannung;
- Fig. 6: in zwei Teildarstellungen die photographischen Aufnahmen einer beispielhaften Lamellendichtung mit an einen Stützring angeschweissten Lamellen und lokal gestörter Lamellengeometrie in der Gesamtdarstellung (Fig. 6a) und in einem vergrösserten Ausschnitt (Fig. 6b); und
- Fig. 7: in drei Teildarstellungen die photographischen Aufnahmen der Lamellendichtung aus Fig. 6 nach der erfindungsgemässen Bearbeitung in der Gesamtdarstellung (Fig. 7a) und in zwei unterschiedlich vergrösserten Ausschnitten (Fig. 7b und 7c).

### WEGE ZUR AUSFÜHRUNG DER ERFINDUNG

In Fig. 1 ist in einer perspektivischen Seitenansicht der typische Aufbau einer Lamellendichtung dargestellt, wie sie bei einer Gasturbine Anwendung findet. Die Lamellendichtung 12 dichtet eine in Pfeilrichtung rotierende Rotorwelle 11 der Gasturbine 10 gegen ein Gehäuse 14. Im kreisringförmigen Zwischenraum zwischen der Rotorwelle 11 und dem Gehäuse 14 ist in einem Ring ein Paket von eng voneinander beabstandeten dünnen Lamellen 13 angeordnet. Die Lamellen 13 sind mit ihrer Fläche parallel zur Drehachse der Maschine orientiert. Die Lamellen sind gemäss Fig. 2 aus der radialen Richtung um einen Winkel w1 verkippt und haben zwischen sich jeweils einen schmalen Spalt bzw. Zwischenraum 18, der vorzugsweise durch zwischen den Lamellen 13 angeordnete Distanzelemente 17 festgelegt wird. Die Distanzelemente 17 der Fig. 2 sind als separate Elemente dargestellt. Sie können aber auch in die Lamellen integriert sein.

Gemäss Fig. 1 und 3 kann der Luftstrom durch die Lamellen 13 durch Verwendung einer vorderen und einer hinteren Endplatte 15 bzw. 16 verändert werden, die einen schmalen Spalt zwischen den Oberflächen des Lamellenpakets und den Endplatten 15, 16 frei lassen (Abstände a und b in Fig. 3). Ein sorgfältiges Design dieser Geometrien macht es möglich, die eingangs erwähnten Aufwärts- oder Abwärtsblaseffekte zu steuern. Auch kann es wünschenswert sein, den Abwärtsblaseffekt durch eine aktive Druckzufuhr entlang der Länge der Lamellen oder nach innen von der Frontseite oder von den rückseitigen Richtungen zu unterstützen.

Einer der anderen Hauptvorteile des in Fig. 1 bzw. 3 dargestellten Lamellendichtungskonzeptes ist eine grössere Toleranz der Radialbewegung als bei den Labyrinth- oder Bürstendichtungen. Dies erfordert einen grossen Abstand zwischen dem inneren Durchmesser der vorderen und rückseitigen Endplatten 15, 16 und der Rotorwelle 11 (Abstände c und d in Fig. 3). Der Spalt zwischen den Lamellen 13 und der Rotorwelle (Abstand e in Fig. 3) beträgt nur wenige Mikron.

Die vorliegende Erfindung bezieht sich auf ein Verfahren zur Bearbeitung von solchen Lamellendichtungen, welches insbesondere einen Schritt des Gesamtherstellungsverfahrens der Produktion von Lamellendichtungen bilden kann. Nachdem die Lamellen in ihren Positionen in einem Ring zusammengebaut und verbunden worden sind, und zwar entweder durch Schweissen, Hartlöten oder eine andere Methode, wird dabei zur Bearbeitung ein Wärmebehandlungsprozess angewendet.

Wenn die Lamellen innerhalb der Dichtung durch Hartlöten verbunden werden sollen, kann die Wärmebehandlung passend im Bezug auf die Wärmebehandlungseigenschaften der betroffenen Legierungen in den Hartlötzyklus eingebaut werden. Wenn jedoch ein Schweissprozess verwendet wird, um die Lamellen zu verbinden, kann ein dem Schweissen nachgeschalteter Wärmebehandlungsprozess notwendig sein, um geeignete Eigenschaften der benutzten Legierungen sicherzustellen. Andernfalls sollte ein separater Wärmebehandlungszyklus entwickelt werden, der keine schädlichen Effekte auf die beteiligten Legierungen oder die hartgelöteten oder geschweißten Verbindungen hat.

Die Geometrie der Lamellen in der Dichtung, wie sie sich aufgrund der Zusammenstellung der Lamellen und deren Verbindung ergibt, ist typischerweise wie in Fig. 4a gezeigt. Die einzelnen Lamellen 22 sind innerhalb der Lamellendichtung 20 in einer von der radialen Richtung abweichenden Orientierung (siehe Winkel w1 in Fig. 2) mit einem aussen umlaufenden Stützring 21 (durch Schweissen, Hartlöten o.ä.) fest verbunden. Im Verlaufe des Herstellungsverfahrens kommt es bei der Ausrichtung der Lamellen 22 zu lokalen Geometriestörungen 23, welche - wenn sie nicht beseitigt würden - die Dichtungswirkung erheblich einschränken würden.

Für die oben erwähnte Wärmebehandlung zur Beseitigung dieser Störungen wird nun gemäss Fig. 4b ein kreiszylindrischer Dorn 24 in das Innere des Lamellenpakets eingeführt, dessen äusserer Durchmesser D derselbe ist, wie der gewünschte innere Durchmesser des Lamellenpakets, wobei eine gewisse thermische Expansion durchaus zugelassen wird.

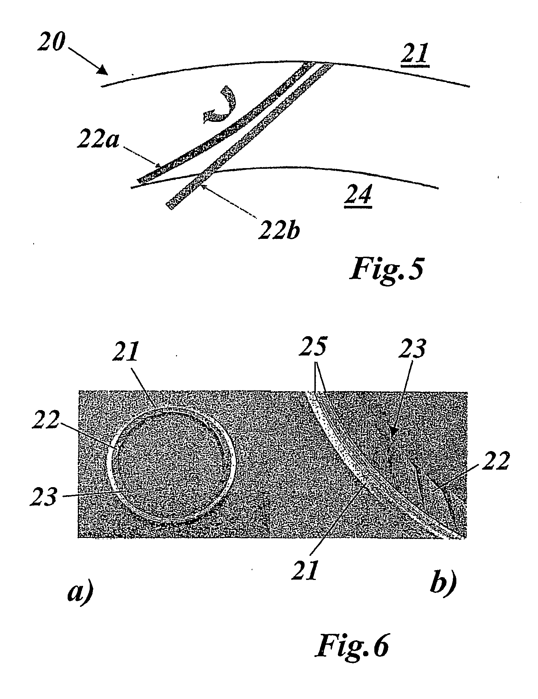

An diesem Punkt des Prozesses sollte es einen Kontakt zwischen jeder Lamellenspitze und der Dornoberfläche geben. Dies erzeugt in den einzelnen Lamellen 22 eine Biegespannung, wie sie in Fig. 5 veranschaulicht ist. Während die Lamellen ohne den eingeschobenen Dorn 24 die in Fig. 5 durch die Lamelle 22b charakterisierte Ausrichtung einnehmen, werden die Lamellen - wie am Beispiel der Lamelle 22a geneigt- durch den eingeschobenen Dom 24 mit einer Biegespannung beaufschlagt.

Jede Lamelle wird aufgrund der Biegespannung etwas in eine gebogene Form verbogen (siehe den gekrümmten Pfeil in Fig. 5). Selbstverständlich muss der innere Durchmesser der Lamellendichtung 20 vor der Wärmebehandlung kleiner sein als der gewünschte innere Durchmesser D nach der Wärmebehandlung, um den Kontakt zwischen den Lamellenspitzen und der Domoberfläche sicherzustellen. Der Grösse des Untermasses der Lamellendichtung steht in Beziehung zur nach der Wärmebehandlung in den Lamellen zurückbleibenden Krümmung. Diese Überlegungen sollten bereits im Entwurfstadium der Dichtung mit einbezogen werden.

Die Temperatur, bei der die Wärmebehandlung durchgeführt wird, und die Dauer der Wärmebehandlung sollten so gewählt werden, dass eine deutliche Spannungsentlastung in den Lamellen 22 auftritt. Auf diese Weise werden nach der Abkühlung, wenn der Dorn 24 noch eingeschoben ist, die Biegespannungen fast auf Null verringert. Dies schliesst mit ein, dass die Kontaktkraft zwischen jeder Lamellespitze und der Domoberfläche auch nahezu Null ist. Wenn dann der Dorn 24 entfernt wird, bleiben die Lamellen in ihrer neuen Form und Position. Daraus resultiert, dass ihre freien Enden eine genaue Replik der Dornoberfläche erzeugen. Da auch einige der Unstimmigkeiten im inneren Durchmesser durch Schwankungen des Anstellwinkels um den Ring herum erzeugt wurden, ist der Anstellwinkel dann wesentlich einheitlicher als vor der Wärmebehandlung und auch der Luftspalt ist gleichbleibender.

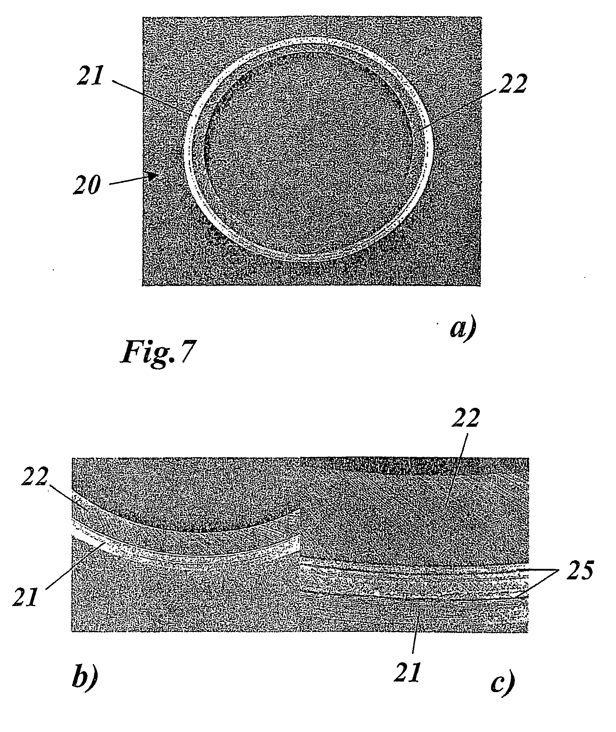

In den Fig. 6 und 7 sind einige photographische Aufnahmen gezeigt, die den Effekt der Wärmebehandlung auf ein mittels Schweissnähten 25 an einen Stützring 21 geschweisstes Lamellenpaket darstellen. In der vor der Wärmebehandlung gemachten Aufnahme der Fig. 6 sind deutlich die Geometriestörungen 23 im Lamellenpaket zu erkennen.

Der geschweißte Ring zeigt gemäss Fig. 7 nach der Wärmebehandlung einen wesentlich gleichmässigeren Anstellwinkel sowie andere geometrische Eigenschaften und eine durch die freien Enden der Lamellen 22 gebildete glatte innere Oberfläche. Eine geringfügige Krümmung der Lamellen 22 lässt sich dabei erkennen.

Das Beibehalten der Konzentrizität und der Koaxialität der inneren und äußeren Durchmesser ist kritisch für die Funktionalität des Lamellenpakets 21, 22. Einmal im Wärmebehandlungsofen richtig in Position gebracht, können geeignete Befestigungsmittel verwendet werden, um sicherzustellen, dass keine Bewegung stattfindet, und dass die richtige Konzentrizität während des Wärmebehandlungszyklus aufrechterhalten wird. Eine zweckgerichtet konstruierte Spannvorrichtung kann den Dom 24 und das Lamellenpaket 21, 22 zusammen positionieren.

Im vorliegenden Fall der Fig. 6 und 7 hatte der verwendete Dorn 24 einen kegelförmigen (konischen) Abschnitt mit einem schmaleren Durchmesser, um das Drüberschieben des Lamellenpakets 21, 22 über ihn zu erleichtern. Einmal darübergeschoben, wurde das Lamellenpaket 21, 22 dann den Dorn 24 hinuntergeschoben, bis es einen zylinderförmigen Abschnitt erreichte, der einen konstanten Durchmesser über die axiale Länge des Lamellenpakets sicherstellte.

Der Einsatz dieses Verfahrens ermöglicht eine Änderung des inneren Durchmessers des Lamellenpakets 21, 22 nach dem Funktionstest. Anfangsuntersuchungen sollten den kleinsten möglichen inneren Durchmesser verwenden, der dann durch Wiederholung des Wärmebehandlungsprozesses mit grösser werdenden Dornen bzw. Durchmessern schrittweise erhöht wird.

Insgesamt zeichnet sich die Erfindung durch folgende Merkmale aus:
- Ein Wärmebehandlungsprozess behebt Abweichungen in der geometrischen Stellung der Lamellen einer Lamellendichtung und stellt eine genaue und wiederholbare innere Oberfläche sicher, und zwar durch Entspannung von Biegungsspannungen in den Lamellen während der Wärmebehandlung, um ihre Geometrie in eine neue Gleichgewichtsposition zu bringen.
- Der Gebrauch eines Dorns mit einem äusseren Durchmesser ungefähr gleich dem gewünschten inneren Durchmesser des resultierenden Lamellenpakets erzeugt die innere Oberfläche des Lamellenpakets, die durch die freien enden der Lamellen bestimmt wird.
- Der oben genannte Prozess kann mit einem simultanen Hartlötzyklus zur Befestigung der Lamellen nach Bildung des Lamellenpakets verbunden werden; werden die Lamellen geschweisst, erfolgt die Wärmebehandlung nach dem Schweissen, wie es für die geschweissten Legierungen erforderlich ist.
- Der Gebrauch von Befestigungen oder Spannvorrichtungen stellt sicher, dass die innere zylinderförmige Oberfläche und die äussere zylinderförmige Oberfläche von Lamellenpaket konzentrisch sind, und innerhalb der Toleranzen koaxial.
- Das Verfahren kann Teil der Herstellung der Lamellendichtungen sein; es kann aber auch Teil eines in bestimmten Service-Abständen durchgeführten Service- und Wartungsprogramms sein, und kann eventuell einen Reinigungsprozess umfassen.

### BEZUGSZEICHENLISTE

- 10: Gasturbine
- 11: Rotorwelle
- 12,20: Lamellendichtung
- 13,22: Lamelle
- 14: Gehäuse
- 15,16: Endplatte
- 17: Distanzelement (separat)
- 18: Spalt (Zwischenraum)
- 19: Gasstrom
- 21: Stützring
- 22a,b: Lamelle
- 23: Geometriestörung
- 24: Dom
- 25: Schweissnaht
- a-e: Abstand
- D: Durchmesser
- w1: Winkel

## Patentansprüche

1. Verfahren zum Bearbeiten von Lamellendichtungen (20) bei welchen Lamellendichtung (20) ein zwischen zwei koaxialen, zylindrischen Flächen gebildeter kreisringförmiger Spalt in axialer Richtung durch eine Vielzahl von einzelnen, dünnen, Lamellen (22; 22a,b) abgedichtet wird, welche sich mit einer von der radialen Richtung abweichenden Orientierung quer durch den Spalt erstrecken und an ihrem der einen zylindrischen Fläche zugeordneten Ende fixiert sind und mit dem anderen, freien Ende lose an der anderen zylindrischen Fläche anliegen, **dadurch gekennzeichnet, dass** in einem ersten Schritt eine Lamellendichtung bereitgestellt wird mit einer Vielzahl von einzelnen, dünnen, Lamellen (22; 22a,b), welche in einer von der radialen Richtung abweichenden Richtung orientiert und an ihrem einen Ende fixiert sind, dass zur gleichmässigen Ausrichtung der freien Enden der Lamellen (22; 22a,b) in einem zweiten Schritt die Lamellen (22, 22a,b) mit ihren freien Enden an einer koaxialen zylindrischen Fläche mit einem vorgegebenen Durchmesser (D) zur Anlage gebracht werden, derart, dass sie mit einer Biegespannung beaufschlagt sind, und dass in einem dritten Schritt die mit der Biegespannung beaufschlagten Lamellen (22; 22a,b) so einer Wärmebehandlung unterzogen werden, dass die Biegespannung vollständig abgebaut wird.

2. Verfahren nach Anspruch 1, **dadurch gekennzeichnet, dass** die Lamellen (22; 22a,b) aus einem Metall oder einer Metalllegierung bestehen.

3. Verfahren nach Anspruch 1 oder 2, **dadurch gekennzeichnet, dass** die Lamellen (22; 22a,b) an ihren äusseren Enden fixiert sind, und dass die Anordnung mit den Lamellen (22; 22a,b) im ersten Schritt über einen koaxial ausgerichteten Dom (24) geschoben wird, der zumindest einen zylindrischen Abschnitt aufweist, dessen Aussendurchmesser im wesentlichen gleich dem vorgegebenen Durchmesser (D) ist.

4. Verfahren nach Ansprüche 3, **dadurch gekennzeichnet, dass** die Lamellen (22; 22a,b) zur Bildung der Lamellendichtung (20) mit einem aussen umlaufenden Gehäuse (14) oder Stützring (21) verschweisst werden, und dass die der gleichmässigen Ausrichtung der freien Enden der Lamellen (22; 22a,b) dienenden Bearbeitungsschritte nach Beendigung des Schweissprozesses durchgeführt werden.

5. Verfahren nach Anspruch 3, **dadurch gekennzeichnet, dass** die Lamellen (22; 22a,b) zur Bildung der Lamellendichtung (20) mit einem aussen umlaufenden Gehäuse (14) oder Stützring (21) hart verlötet werden, und dass die der gleichmässigen Ausrichtung der freien Enden der Lamellen (22; 22a,b) dienenden Bearbeitungsschritte innerhalb des Lötprozesses durchgeführt werden.

6. Verfahren nach einem der Ansprüche 3 bis 5, **dadurch gekennzeichnet, dass** die der gleichmässigen Ausrichtung der freien Enden der Lamellen (22; 22a,b) dienenden Bearbeitungsschritte mehrfach mit schrittweise erhöhtem vorgegebenen Durchmesser (D) durchgeführt werden.

7. Verfahren nach einem der Ansprüche 3 bis 6 **dadurch gekennzeichnet, dass** ein Dom (24) verwendet wird, der einen an den zylindrischen Abschnitt angrenzenden konischen Abschnitt aufweist, und dass die Anordnung mit den Lamellen (22; 22a,b) im ersten Schritt über den konischen Abschnitt auf den Dom (24) geschoben wird.

## Claims

1. Method of processing leaf seals (20), in which leaf seals (20) an annular gap formed between two coaxial, cylindrical surfaces is sealed off in the axial direction by a multiplicity of individual, thin leaves (22; 22a, b) which, with an orientation deviating from the radial direction, extend transversely through the gap and are fixed at their end assigned to the one cylindrical surface and bear loosely with the other, free end against the other cylindrical surface, **characterized in that** in a first step, a leaf seal is provided with a multiplicity of individual thin leaves (22; 22a, b), which are oriented in a direction deviating from the radial direction and are fixed on their one end, **in that** for the uniform orientation of the free ends of the leaves (22; 22a, b), in a second step, the leaves (22, 22a, b) are brought to bear with their free ends against a coaxial cylindrical surface having a predetermined diameter (D) in such a way that they are subjected to a bending stress, and **in that**, in a third step, the leaves (22; 22a, b) subjected to the bending stress are subjected to a heat treatment in such a way that the bending stress is completely removed.

2. Method according to Claim 1, **characterized in that** the leaves (22; 22a, b) are made of metal or a metal alloy.

3. Method according to Claim 1 or 2, **characterized in that** the leaves (22; 22a, b) are fixed at their outer ends, and **in that** the arrangement with the leaves (22; 22a, b), in the first step, is pushed over a coaxially oriented mandrel (24) which has at least one cylindrical section, the outside diameter of which is essentially the same as the predetermined diameter (D).

4. Method according to Claim 3, **characterized in that** the leaves (22; 22a, b) for forming the leaf seal (20) are welded to an encircling housing (14) or backing ring (21) on the outside, and **in that** the processing steps serving for the uniform orientation of the free ends of the leaves (22; 22a, b) are carried out after completion of the welding process.

5. Method according to Claim 3, **characterized in that** the leaves (22; 22a, b) for forming the leaf seal (20) are brazed to an encircling housing (14) or backing ring (21) on the outside, and **in that** the processing steps serving for the uniform orientation of the free ends of the leaves (22; 22a, b) are carried out during the brazing process.

6. Method according to one of Claims 3 to 5, **characterized in that** the processing steps serving for the uniform orientation of the free ends of the leaves (22; 22a, b) are carried out repeatedly with a gradually increased predetermined diameter (D).

7. Method according to one of Claims 3 to 6, **characterized in that** a mandrel (24) is used which has a conical section adjoining the cylindrical section, and **in that** the arrangement with the leaves (22; 22a, b), in the first step, is pushed over the conical section onto the mandrel (24).

## Revendications

1. Procédé d'usinage de garnitures d'étanchéité (20) à lamelles, dans lequel un interstice en anneau circulaire formé entre deux surfaces cylindriques coaxiales de ladite garniture d'étanchéité (20) à lamelles est fermé hermétiquement dans la direction axiale par plusieurs minces lamelles (22; 22a, b) qui s'étendent transversalement dans l'interstice dans une orientation différente de la direction radiale, qui sont fixées à leur extrémité associée à l'une des surfaces cylindriques et dont l'autre extrémité libre repose lâchement contre l'autre surface cylindrique, **caractérisé en ce que**
dans une première étape, on prépare une garniture d'étanchéité à lamelles qui présente plusieurs minces lamelles (22; 22a, b) distinctes orientées dans une direction différente de la direction radiale et fixées à une extrémité,
**en ce que** dans une deuxième étape, pour orienter de manière uniforme les extrémités libres des lamelles (22; 22a, b), les lamelles (22; 22a, b) sont amenées à se placer par leur extrémité libre sur une surface cylindrique coaxiale d'un diamètre (D) prédéterminé de telle sorte qu'une contrainte de flexion leur soit appliquée et
**en ce que** dans une troisième étape, les lamelles (22; 22a, b) sur lesquelles est appliquée une contrainte de flexion subissent un traitement thermique de manière à éliminer complètement la contrainte de flexion.

2. Procédé selon la revendication 1, **caractérisé en ce que** les lamelles (22; 22a, b) sont constituées d'un métal ou d'un alliage de métaux.

3. Procédé selon les revendications 1 ou 2, **caractérisé en ce que** les lamelles (22; 22a, b) sont fixées à leur extrémité extérieure et **en ce que** dans une première étape, l'ensemble constitué des lamelles (22; 22a, b) est passé au-dessus d'un mandrin (24) orienté coaxialement et qui présente au moins une partie cylindrique dont le diamètre extérieur est essentiellement identique au diamètre prédéterminé (D).

4. Procédé selon la revendication 3, **caractérisé en ce que** les lamelles (22; 22a, b) sont soudées à un boîtier périphérique extérieur (14) ou à une bague de soutien (21) pour former la lamelle (20) et **en ce que** les étapes d'usinage qui servent à orienter de manière uniforme les extrémités libres des lamelles (22; 22a, b) sont exécutées après l'opération de soudage.

5. Procédé selon la revendication 3, **caractérisé en ce que** les lamelles (22; 22a, b) sont brasées sur un boîtier périphérique extérieur (14) ou une bague de soutien (21) pour former la garniture d'étanchéité (20) à lamelles et **en ce que** les étapes de traitement qui servent à orienter de manière uniforme les extrémités libres des lamelles (22; 22a, b) sont réalisées pendant l'opération de brasage.

6. Procédé selon l'une des revendications 3 à 5, **caractérisé en ce que** les étapes de traitement qui servent à orienter de manière uniforme les extrémités libres des lamelles (22; 22a, b) sont exécutées plusieurs fois à un diamètre prédéterminé (D) augmenté par pas.

7. Procédé selon l'une des revendications 3 à 6, **caractérisé en ce qu'**il utilise un mandrin (24) qui présente une partie conique adjacente à la partie cylindrique et **en ce que** l'ensemble doté des lamelles (22; 22a, b) est déplacé dans la première étape au-dessus de la partie conique du mandrin (24).
